# EUROPEAN PATENT APPLICATION

(11) **EP 4 768 384 A1**
(43) Date of publication of application: **01.07.2026**
(21) Application number: 24858509.3
(22) Date of filing: 26.08.2024
(51) Int. Cl.: B64C 1/26, B64C 27/22, B64C 29/00

(54) **AIRCRAFT, AND METHOD FOR CONNECTING CANARD AND ARM THEREOF**

(30) Priority: 25.08.2023 CN 202311077634
(71) Applicant: Autoflight (Kunshan) Co., Ltd., Suzhou, Jiangsu 215345 (CN)
(72) Inventor: TIAN, Yu, Suzhou, Jiangsu 215345 (CN); CUI, Yongqiang, Suzhou, Jiangsu 215345 (CN)
(74) Representative: MERH-IP Matias Erny Reichl Hoffmann Patentanwälte PartG mbB
(86) International application number: PCT/CN2024/114486
(87) International publication number: WO 2025/044973

(57) **Abstract**

This present invention relates to the field of aircraft and discloses an aircraft and a method for connecting a canard to an arm. The connection method is used to couple a canard and an arm. The canard comprises a coupling insertion portion, which comprises a plurality of fixing portions. The arm comprises an arm insertion cavity, and an insertion opening is provided at one end of the arm insertion cavity. The coupling insertion portion is configured to be inserted into the arm insertion cavity through the insertion opening and is fixed within the arm via the fixing portions. In the present invention a detachable structure is enabled between the canard and the arm, allowing the position of the center of lift to be adjusted by exchanging canards featuring different designs, thereby adapting to aircraft cabins with different centers of gravity.

## Description

### FIELD OF THE DISCLOSURE

The present invention relates to the field of aircraft, and particularly relates to an aircraft and a method for connecting a canard to an arm thereof.

### BACKGROUND OF THE INVENTION

Currently, flight platforms are equipped with cabins to enable the transport of passengers and cargo. A flight platform generally comprises components such as arms, a fuselage, canards, and a control system. Many modern aircraft have begun implementing platform-based component management in their designs - that is, a standardization of certain parts. Platform-based management is conducive to reducing research and development investment and lowering costs. For instance, the same flight platform can be assembled with different types of cabins, such as passenger cabins or cargo cabins, to meet various project requirements. However, exchanging the cabin may cause a shift in the aircraft's center of gravity, while the center of lift cannot be correspondingly adjusted. Consequently, the aircraft is unable to achieve the optimal positional relationship between the center of lift and the center of gravity, making it difficult to achieve optimal flight stability.

### SUMMARY OF THE INVENTION

The object of the present invention is to provide an aircraft and a method for connecting a canard to an arm thereof. The method for connecting a canard to an arm according to the present invention enables a detachable structure between the canard and the arm. Exchanging canards featuring different designs allows the position of the center of lift to be adjusted in order to accommodate aircraft cabins with different centers of gravity.

To solve the above technical problem, the present invention provides a method for connecting a canard to an arm, applicable to an unmanned aerial vehicle (UAV), comprising: S1: providing a canard, wherein the canard comprises a coupling insertion portion, and the coupling insertion portion comprises a plurality of fixing portions; S2: providing an arm, wherein the arm comprises an arm insertion cavity, and an insertion opening is provided at one end of the arm insertion cavity; and S3: inserting the coupling insertion portion into the arm insertion cavity through the insertion opening, and fixing the coupling insertion portion in the arm via the fixing portions.

Further, the present invention provides an aircraft, comprising a canard and a pair of arms, wherein the canard and the pair of arms are coupled respectively by the method for connecting a canard to an arm.

Preferably, the coupling insertion portion comprises a pair of mutually matched support beams and fixed hole plates, the fixed hole plates are respectively coupled to a side wall of each of the support beams, the fixing portions are disposed on the fixed hole plates, and each fixing portion comprises a vertically extending canard fixing hole.

Preferably, an arm fixing plate is provided at a bottom of the arm insertion cavity, and a plurality of arm fixing holes is provided on the arm fixing plate; wherein fixing the coupling insertion portion in the arm via the fixing portions specifically comprises: aligning the canard fixing holes with the arm fixing holes in a one-to-one correspondence, and connecting the canard fixing holes with the arm fixing holes via bolts, thereby fixing the coupling insertion portion in the arm.

Preferably, after the coupling insertion portion has been inserted into the arm insertion cavity, an inner wall of the arm insertion cavity and an outer wall of the coupling insertion portion fit closely with each other.

Preferably, the canard comprises a canard body and a pair of coupling insertion portions, and the pair of coupling insertion portions is symmetrically distributed on both sides of the canard body.

Preferably, an interior of the canard body comprises a pair of canard beams, and the pair of canard beams is coupled to the pair of support beams of the coupling insertion portions in a one-to-one correspondence.

Preferably, an upper box portion is provided at an upper part of the arm insertion cavity; after the coupling insertion portion has been inserted into the arm insertion cavity, the upper box portion and the arm fixing plate cooperatively clamp the coupling insertion portion from above and below to form a stable support.

Preferably, the canard further comprises an outboard wing, the outboard wing comprises a first end surface, the first end surface is provided with at least one positioning pin and with at least two fixing pins, the arm comprises a second end surface, and the second end surface is provided with at least three pin holes, wherein lengths of the positioning pin and of the fixing pins are different; after step S3, the method further comprises: Step S4: sequentially aligning the at least one positioning pin and the at least two fixing pins with the at least three pin holes in a one-to-one correspondence, such that the first end surface and the second end surface fit closely with each other.

Preferably, the at least two fixing pins comprise a first fixing pin and a second fixing pin, the first fixing pin is provided with a first fixing pin hole, the second fixing pin is provided with a second fixing pin hole, and after step S4, the method further comprises S5: passing a bolt through the arm into the first fixing pin hole to connect the arm and the first fixing pin; and passing a bolt through the arm into the second fixing pin hole to connect the arm and the second fixing pin, wherein extension directions of the first fixing pin hole and of the second fixing pin hole are perpendicular to each other.

The object of the present invention is to provide an aircraft and a method for connecting a canard to an arm thereof. The method for connecting a canard to an arm according to the present invention enables the formation of a detachable structure between the canard and the arm, allowing the position of the center of lift to be adjusted by exchanging canards featuring different designs to accommodate aircraft cabins with different centers of gravity.

### BRIEF DESCRIPTION OF DRAWINGS

FIG. 1 shows a flowchart illustrating a method for connecting a canard and an arm according to a first embodiment of the present invention.
FIG. 2 shows a schematic structural diagram of a connection structure of the canard and the arm according to the first embodiment of the present invention.
FIG. 3 shows an exploded structural diagram of a connection structure of the canard and the arm according to the first embodiment of the present invention.
FIG. 4 shows another schematic structural diagram of a connection structure of the canard and the arm according to the first embodiment of the present invention.
FIG. 5 shows another schematic structural diagram of a connection structure of an outboard wing and the arm according to the first embodiment of the present invention.
FIG. 6 shows an exploded structural diagram of a connection structure of the canard and the arm according to the first embodiment of the present invention.
FIG. 7 shows a schematic structural diagram of an aircraft according to a second embodiment of the present invention.

### DETAILED DESCRIPTION

The following embodiments further illustrate the technical solutions of the present invention. It can be understood that the specific embodiments described herein are only used to explain the present invention. Additionally, it should be noted that, for ease of description, the drawings only show parts related to the present invention and not all parts.

In the description of the present invention, unless otherwise specified, terms such as "install", "connect", and "attach" should be interpreted broadly. For example, connections may be fixed or detachable, mechanical or electrical, direct or indirect via intermediate components, or internal connections between two elements. Those skilled in the art can understand the specific meanings of these terms in the present invention based on the context.

In the present invention, unless otherwise specified and defined, the first feature being "on" or "under" the second feature may include the first and second features being in direct contact, or may include the first and second features not being in direct contact but being in contact through additional features between them. Moreover, the first feature being "on", "above", or "over" the second feature includes the first feature being directly above or obliquely above the second feature, or merely indicates that the horizontal height of the first feature is higher than that of the second feature. The first feature being "under", "below", or "beneath" the second feature includes the first feature being directly below or obliquely below the second feature, or merely indicates that the horizontal height of the first feature is lower than that of the second feature.

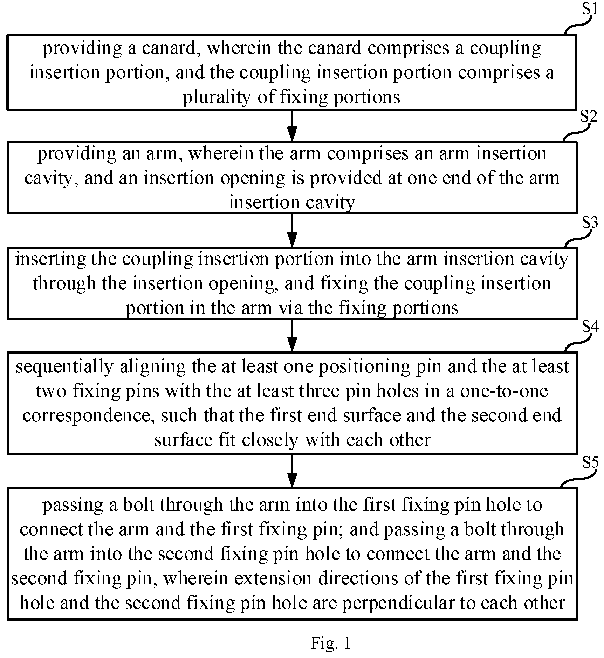

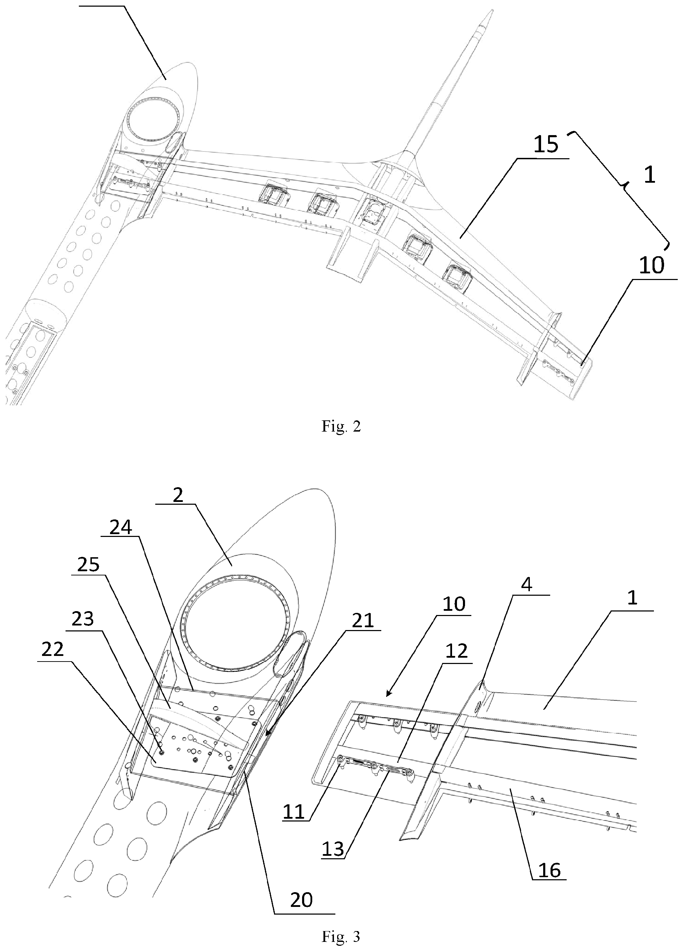

The first embodiment of the present invention is described below with reference to the accompanying drawings. As shown in FIG. 1 and FIG. 2, the method for connecting a canard to an arm according to the embodiment of the present invention is used for coupling a canard 1 and an arm 2. The method for connecting a canard to an arm according to the embodiment of the present invention comprises the following steps:
S1: providing a canard, wherein the canard comprises a coupling insertion portion, and the coupling insertion portion comprises a plurality of fixing portions.

Specifically, as shown in FIG. 2 to FIG. 4, the method for connecting a canard to an arm according to the embodiment of the present invention comprises: providing a canard 1, wherein the canard 1 comprises a canard body 15 and a pair of coupling insertion portions 10. The pair of coupling insertion portions 10 is symmetrically distributed on both sides of the canard body 15. The coupling insertion portion 10 comprises a pair of mutually matched and connected support beams 12 and fixed hole plates 13. The fixed hole plates 13 are boltingly connected to respective side walls of the support beams 12. The fixed hole plates 13 comprise a plurality of fixing portions 11, and each fixing portion 11 comprises a vertically extending canard fixing hole 14. Since the fixed hole plates 13 are mounted on the side walls of the support beams 12, the fixed hole plates 13 are subjected only to shear forces in the vertical direction and are thus less likely to become loose. In this embodiment, there are three canard fixing holes 14 respectively, although other quantities may also be employed.

S2: providing an arm, wherein the arm comprises an arm insertion cavity, and an insertion opening is provided at one end of the arm insertion cavity.

Specifically, providing an arm 2, wherein the arm 2 comprises an arm insertion cavity 20, and an insertion opening 21 is provided at one end of the arm insertion cavity 20. An arm fixing plate 22 is provided at the bottom of the arm insertion cavity 20 and is fixed to the arm 2 itself. A plurality of arm fixing holes 23 is provided on the arm fixing plate 22, the quantity of which is the same as that of the canard fixing holes 14.

S3: inserting the coupling insertion portion into the arm insertion cavity through the insertion opening, and fixing the coupling insertion portion in the arm via the fixing portions.

After the coupling insertion portion 10 is inserted into the arm insertion cavity 20, the canard fixing holes 14 are aligned with the arm fixing holes 23 in a one-to-one manner. The method for connecting the canard to the arm comprises: aligning the canard fixing holes 14 with the arm fixing holes 23 in a one-to-one correspondence, and connecting the canard fixing holes 14 with the arm fixing holes 23 via bolts, thereby fixing the coupling insertion portion 10 in the arm 2. An upper box portion 24 is further provided at an upper part of the arm insertion cavity 20. After the coupling insertion portion 10 is inserted into the arm insertion cavity 20, the upper box portion 24 and the arm fixing plate 22 cooperatively clamp the coupling insertion portion 10 from above and below to absorb vibrations of the coupling insertion portion 10 within the arm insertion cavity 20, thereby forming a stable support. A through hole corresponding to the canard fixing hole 14 may be provided inside the upper box portion 24, and the bolt is passed through the through hole of the upper box portion 24 to connect the canard fixing hole 14 and the arm fixing hole 23 in series, thereby fixing the coupling insertion portion 10 within the arm insertion cavity 20.

A structural member 25 is further provided at an upper part of the upper box portion 24, and the structural member 25 is used for connecting the upper and lower skins of the arm to enhance the stiffness of the arm. The structural member 25 does not interfere with the bolts connecting the canard fixing holes 14 and the arm fixing holes 23. Preferably, after the coupling insertion portion 10 is inserted into the arm insertion cavity 20, the inner wall of the arm insertion cavity 20 can fit closely with the outer wall of the coupling insertion portion 10, thereby forming a stable support. The interior of the canard body 15 further comprises a pair of canard beams 16, and the pair of canard beams 16 is coupled to the pair of support beams 12 of the coupling insertion portion 10 in a one-to-one correspondence, making them less likely to fracture under stress, thereby ensuring the connection strength of the coupling insertion portion 10.

The method for connecting a canard to an arm according to the present invention enables the canard and the arm to form a detachable structure. The position of the center of lift can be adjusted by exchanging canards featuring different configurations/designs to accommodate aircraft cabins with different centers of gravity.

Furthermore, as shown in FIG. 2, a canard cover 4 is further provided on a side of the coupling insertion portion 10 proximate to the canard 1. After the coupling insertion portion 10 is inserted into the arm insertion cavity 20, the canard cover 4 can abut against a side wall of the arm 2, which effectively prevents rainwater and the like from entering the interior of the arm 2 through the insertion opening 21.

In some embodiments, after step S3, the method further comprises the following steps:
S4: Sequentially aligning at least one positioning pin and at least two fixing pins with at least three pin holes in a one-to-one correspondence, such that a first end surface and a second end surface fit closely with each other.

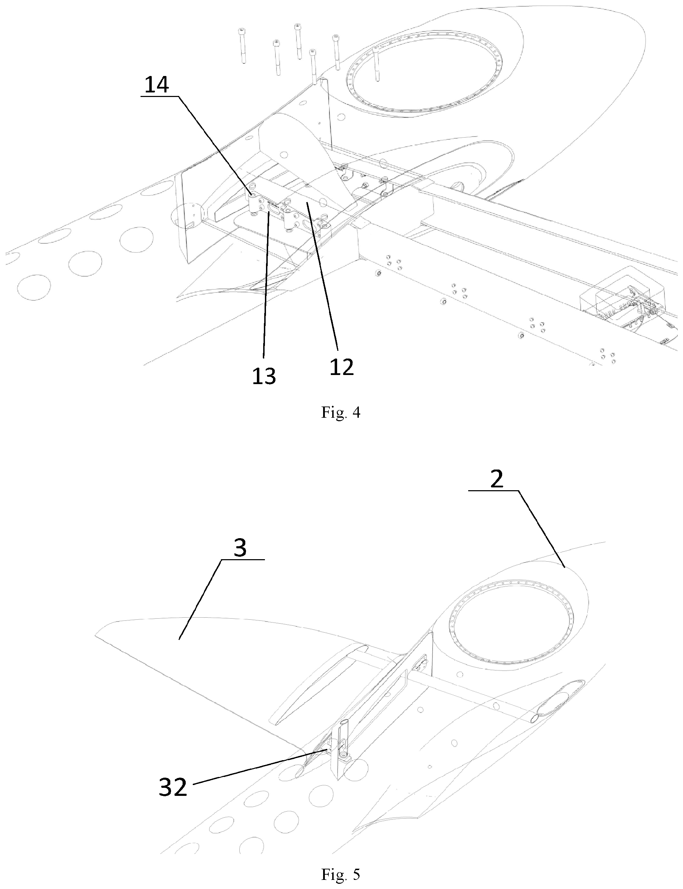

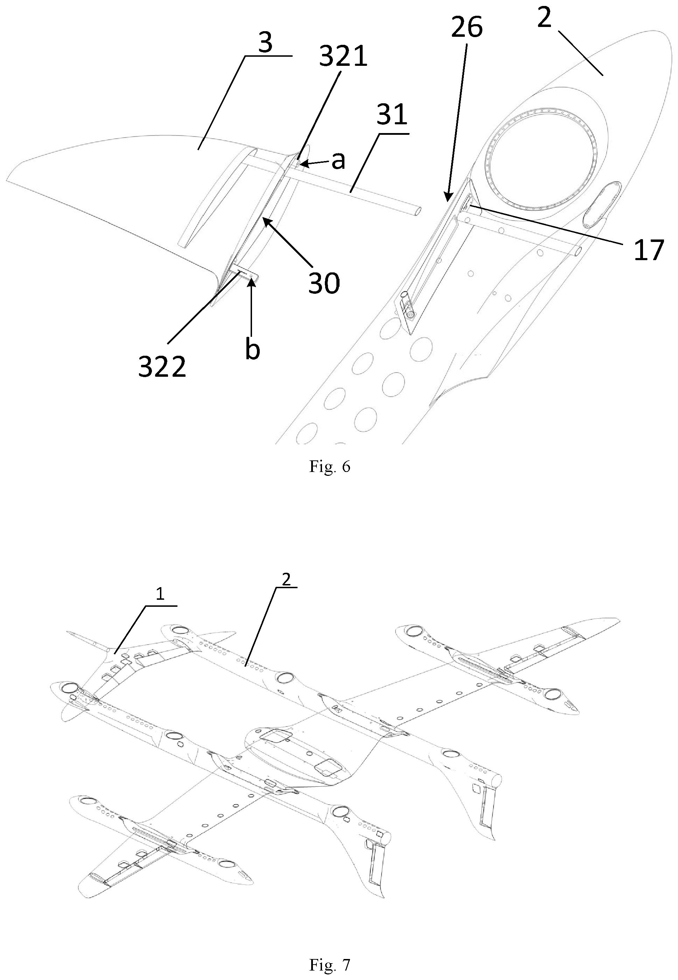

Specifically, as shown in FIG. 5 and FIG. 6, the canard 1 further comprises an outboard wing 3, the outboard wing 3 comprises a first end surface 30, and the first end surface 30 is provided with one positioning pin 31 and with two fixing pins 32. The arm 2 comprises a second end surface 26, and the second end surface 26 is provided with three pin holes 17. After step S3, the method further comprises: sequentially inserting the one positioning pin 31 and the two fixing pins 32 into the three pin holes 17 in a one-to-one correspondence, so as to make the first end surface 30 and the second end surface 26 fit closely with each other, wherein the positioning pin 31 is configured to locate an installation position of the outboard wing 3. The two fixing pins 32 comprise a first fixing pin 321 and a second fixing pin 322, and the lengths of the positioning pin 31 and of the fixing pins 32 are different. In the present embodiment, the length of the positioning pin 31 is greater than the lengths of the fixing pins 32, and the length of the second fixing pin 322 is greater than the length of the first fixing pin 321. Accordingly, the positioning pin 31, the second fixing pin 322, and the first fixing pin 321 are sequentially inserted into the corresponding pin holes 17.

After step S4, the method further comprises step S5:
Passing a bolt through the arm to access the first fixing pin hole, so as to connect the arm and the first fixing pin; and passing a bolt through the arm to access the second fixing pin hole, so as to connect the arm and the second fixing pin, wherein the extension directions of the first fixing pin hole and the second fixing pin hole are perpendicular to each other.

Specifically, the first fixing pin 321 comprises a first fixing pin hole, a, and the second fixing pin 322 comprises a second fixing pin hole, b, wherein the extension directions of the first fixing pin hole, a, and of the second fixing pin hole, b, are perpendicular to each other. For example, the extension direction of the first fixing pin hole, a, inside the first fixing pin 321 may be along an insertion direction of the fixing pins. A bolt is passed through a fixing plate on the arm 2 and then into the first fixing pin hole, a, to connect the first fixing pin 321 and the arm 2. The extension direction of the second fixing pin hole, b, inside the second fixing pin 322 is perpendicular to the insertion direction of the fixing pins. A bolt is inserted downward from the upper part of the arm 2, passes through a fixing plate within the arm 2, and then into the second fixing pin hole, b, to connect the second fixing pin 322 and the arm 2. Thus, through the bolt connections in two mutually perpendicular directions, the connection between the outboard wing 3 and the arm 2 can be better ensured. It should be noted that the quantity of positioning pins 31 may be more than one, and the number of fixing pins 32 may be two or more. The extension directions of the first fixing pin hole, a, and the second fixing pin hole, b, may also be interchanged, which is not limited herein.

A second embodiment of the present invention further provides an aircraft. As shown in FIG. 7, the aircraft comprises a canard 1 and a pair of arms 2, wherein the canard 1 and the pair of arms 2 are respectively coupled by the aforementioned method for connecting a canard to an arm. The method for connecting a canard to an arm according to the embodiments of the present invention enables the canard and the arm to form a detachable structure, allowing the position of the center of lift to be adjusted by exchanging canards featuring different designs to accommodate aircraft cabins with different centers of gravity.

The above embodiments are only illustrative of the principles and effects of the present invention. Anyone skilled in the art may modify or change the above embodiments without departing from the purpose of the present invention. Therefore, all equivalent modifications or changes made by those skilled in the art without departing from the disclosed purpose of the present invention shall fall within the scope of the claims of the present invention.

## Claims

1. A method for connecting a canard to an arm, applicable to an unmanned aerial vehicle (UAV), comprising:
S1: providing a canard (1), wherein the canard (1) comprises a coupling insertion portion (10), and the coupling insertion portion (10) comprises a plurality of fixing portions (11);
S2: providing an arm (2), wherein the arm (2) comprises an arm insertion cavity (20), and an insertion opening (21) is provided at one end of the arm insertion cavity (20); and
S3: inserting the coupling insertion portion (10) into the arm insertion cavity (20) through the insertion opening (21), and fixing the coupling insertion portion (10) in the arm (2) via the fixing portions (11).

2. The method for connecting a canard to an arm according to claim 1, wherein the coupling insertion portion (10) comprises a pair of mutually matched support beams (12) and fixed hole plates (13), the fixed hole plates (13) are respectively coupled to a side wall of each of the support beams (12), the fixing portions (11) are disposed on the fixed hole plates (13), and each fixing portion (11) comprises a vertically extending canard fixing hole (14).

3. The method for connecting a canard to an arm according to claim 2, wherein an arm fixing plate (22) is provided at a bottom of the arm insertion cavity (20), and a plurality of arm fixing holes (23) is provided on the arm fixing plate (22); wherein fixing the coupling insertion portion (10) in the arm (2) via the fixing portions (11) specifically comprises: aligning the canard fixing holes (14) with the arm fixing holes (23) in a one-to-one correspondence, and connecting the canard fixing holes (14) with the arm fixing holes (23) via bolts, thereby fixing the coupling insertion portion (10) in the arm (2).

4. The method for connecting a canard to an arm according to claim 1, wherein, after the coupling insertion portion (10) has been inserted into the arm insertion cavity (20), an inner wall of the arm insertion cavity (20) and an outer wall of the coupling insertion portion (10) fit closely with each other.

5. The method for connecting a canard to an arm according to claim 1, wherein the canard (1) comprises a canard body (15) and a pair of coupling insertion portions (10), and the pair of coupling insertion portions (10) is symmetrically distributed on both sides of the canard body (15).

6. The method for connecting a canard to an arm according to claim 5, wherein an interior of the canard body (15) comprises a pair of canard beams (16), and the pair of canard beams (16) is coupled to the pair of support beams (12) of the coupling insertion portions (10) in a one-to-one correspondence.

7. The method for connecting a canard to an arm according to claim 3, wherein an upper box portion (24) is provided at an upper part of the arm insertion cavity (20); after the coupling insertion portion (10) has been inserted into the arm insertion cavity (20), the upper box portion (24) and the arm fixing plate (22) cooperatively clamp the coupling insertion portion (10) from above and below to form a stable support.

8. The method for connecting a canard to an arm according to claim 5, wherein the canard (1) further comprises an outboard wing (3), the outboard wing (3) comprises a first end surface (30), the first end surface (30) is provided with at least one positioning pin (31) and with at least two fixing pins (32), the arm (2) comprises a second end surface (25), and the second end surface (25) is provided with at least three pin holes (17), wherein lengths of the positioning pin (31) and of the fixing pins (32) are different; after step S3, the method further comprises: Step S4: sequentially aligning the at least one positioning pin (31) and the at least two fixing pins (32) with the at least three pin holes (17) in a one-to-one correspondence, such that the first end surface (30) and the second end surface (25) fit closely with each other.

9. The method for connecting a canard to an arm according to claim 8, wherein the at least two fixing pins (32) comprise a first fixing pin (321) and a second fixing pin (322), the first fixing pin (321) is provided with a first fixing pin hole (a), the second fixing pin (322) is provided with a second fixing pin hole (b), and after step S4, the method further comprises S5: passing a bolt through the arm (2) into the first fixing pin hole (a) to connect the arm (2) and the first fixing pin (321); and passing a bolt through the arm (2) into the second fixing pin hole (b) to connect the arm (2) and the second fixing pin (322), wherein extension directions of the first fixing pin hole (a) and of the second fixing pin hole (b) are perpendicular to each other.

10. An aircraft, comprising a canard (1) and a pair of arms (2), wherein the canard (1) and the pair of arms (2) are coupled respectively by the method for connecting a canard to an arm according to any one of claims 1 to 9.
